# EUROPEAN PATENT APPLICATION

(11) **EP 3 881 941 A1**
(43) Date of publication of application: **22.09.2021**
(21) Application number: 20163607.3
(22) Date of filing: 17.03.2020
(51) Int. Cl.: B05D 1/00

(54) **PLASMA COATING METHOD AND APPARATUS FOR BIOLOGICAL SURFACE MODIFICATION**

(71) Applicant: Molecular Plasma Group SA, 3895 Foetz (LU)
(72) Inventor: BOREK-DONTEN, Joanna, B-6700 Arlon (BE); SCHELTJENS, Gill, B-2850 Boom (BE); HEYBERGER, Régis, F-57100 Thionville (FR)
(74) Representative: IPLodge bv

(57) **Abstract**

The present invention concerns a method for providing a bio-active layer on a surface, comprising the steps of: a) ionizing a plasma gas at low temperature and at about atmospheric pressure, thereby creating a plasma; b) introducing a precursor into said plasma; c) exposing the surface to said plasma comprising said precursor, thereby forming a coating onto said surface, whereby the precursors comprise amine, glycol, fluorocarbon, siloxane, sulphonate, ammonium, phosphonate, quaternary ammonium, metal nanoparticles, enzyme, surfactant, peptide, lipopeptide, chitosan or any combination thereof.

## Description

### Technical field

The present invention concerns a method and apparatus for plasma coating of a surface, to modify biological properties of this surface. Use is made of an atmospheric low-temperature plasma process to form a thin coating on a surface. Hereby, the properties of the surface with respect to biological compounds or organisms are modified.

### Background of the invention

Many applications exist wherein surfaces come into contact with biological compounds or organisms. This includes many laboratory equipment, food and beverage containers, marine vessels, underwater construction, microfluidics chips, fluidized bed reactors, etc.

In many of these cases biological organisms or compounds may adhere to the surface, thereby contaminating the surface. Cleaning these surfaces may be very difficult and time-consuming.

Current approaches involve protecting surfaces against bio-contamination by deposition of a coating. These coatings can be applied using a wet coating deposition technique. Examples can be found in:
- Joh et al., P. Natl. Acad. Sci. USA. 2017, 114, E7054-E7062, "Inkjet-printed point-of-care immunoassay on a nanoscale polymer brush enables subpicomolar detection of analytes in blood."
- Hucknall et al., Adv. Mater. 2009, 21, 1968-1971, "Simple Fabrication of Antibody Microarrays on Nonfouling Polymer Brushes with Femtomolar Sensitivity for Protein Analytes in Serum and Blood"
- Deng et al., J. Am. Chem. Soc. 2014, 136, 12852-12855, "Poly(oligoethylene glycol methacrylate) Dip-Coating: Turning Cellulose Paper into a Protein-Repellent Platform for Biosensors"
- Sato et al., Macromolecules, 2018, 51, 10065-10073, "Sol-Gel Preparation of Initiator Layers for Surface-Initiated ATRP: Large-Scale Formation of Polymer Brushes Is Not a Dream"
- Liu et al., Biomacromolecules, 2012, 13, 1086-1092, "Ultralow Fouling Polyacrylamide on Gold Surfaces via Surface-Initiated Atom Transfer Radical Polymerization"
- Van Andel et al., Langmuir, 2019, 35, 1181-1191, "Systematic Comparison of Zwitterionic and Non-Zwitterionic Antifouling Polymer Brushes on a Bead-Based Platform"
- Koc et al., Langmuir, 2019, 35, 1552-1562, "Low-Fouling Thin Hydrogel Coatings Made of Photo-Cross-Linked Polyzwitterions"
- Sun et al., Anal. Chem. 2017, 89, 10999-11004, "Paper Sensor Coated with a Poly(carboxybetaine)-Multiple DOPA Conjugate via Dip-Coating for Biosensing in Complex Media"
- Cheng et al., Colloids and Surfaces B: Biointerfaces, 2019, 173, 77-84, "Surface functionalization of polytetrafluoroethylene substrate with hybrid processes comprising plasma treatment and chemical reactions"

In the above examples, the following strategy is maintained to produce polymer brushes based on Surface-Initiated atom-transfer radical polymerisation (ATRP):
- Surface preparation: wet chemical deposition of a component that can initiate a radical chain growth reaction (i.e. an initiator)
- Polymer brush formation: wet chemical deposition of a monomer that grows from the initiator sites through radical chain growth.

The thickness of the deposited layer hereby is typically in the range between 60 and 100 nm. The coating techniques described above make use of 'wet coating', whereby a surface is subjected to a liquid solution containing the coating material. Such wet coating techniques suffer from a number of drawbacks such as:
- a long drying time;
- large amount of waste resulting in a large stress on the environment;
- homogeneity and conformality of the coating is not always as desired,
- the thickness of the coating is not always under control, and may locally be much higher than desired.

A coating technique which has gained momentum in the last few decades is plasma coating. Hereby a precursor which is to form the coating on the surface of a substrate is brought at least partially in a plasma state, and the surface of the substrate is subjected to the plasmized precursor. As a result, the precursor can form strong bonds with the substrate and/or form cross-links between substance molecules, thereby resulting in a coating which may be thin, yet very durable, homogeneous and conformal. If the precursor is a polymerizable monomer, polymerisation may occur directly onto the surface of the substrate.

Plasma coating techniques may be divided into vacuum techniques which having an operating pressure which is significantly lower than atmospheric pressure, and into atmospheric techniques which operate at or near atmospheric pressure, for instance between 400 mbar and 1600 mbar, but preferably very close to atmospheric pressure e.g. between 950 mbar and 1050mbar. The present invention relates to an atmospheric plasma technique, which presents a number of advantages over vacuum plasma techniques, such as that no time-consuming depressurizing step is required and that both batch processing and inline processing, whereby the one or more objects which are to be treated, are sequentially treated, are easily achievable.

A technique for providing a surface with a protective layer is vacuum plasma coating, examples of which can be found in Materials 2016, 9, 515; doi:10.3390/ma9070515, "Non-Equilibrium Plasma Processing for the Preparation of Antibacterial Surfaces" and references therein.

Plasma coating can also be performed using an atmospheric pressure plasma, as for instance in Plasma Processes and Polymers, 9, 11-12, 2012 1176-1183, "Plasma Deposition of PEO-Like Coatings with Aerosol-Assisted Dielectric Barrier Discharges", and in Plasma Processes and Polymers, 12, 11, 2015 1208-1219, "Atmospheric-Pressure Plasma Deposited Epoxy-Rich Thin Films as Platforms for Biomolecule Immobilization-Application for Anti-Biofouling and Xenobiotic-Degrading Surfaces".

The present invention wants to improve on the above mentioned techniques to provide coatings to surface to alter the surface's affinity to biological organisms and compounds, and this for high throughput applications.

### Summary of the invention

The present invention concerns a method for providing a bio-active layer on a surface, comprising the steps of:
a) ionizing a plasma gas at low temperature and at about atmospheric pressure, thereby creating a plasma;
b) introducing a precursor into said plasma;
c) exposing the surface to said plasma comprising said precursor, thereby forming a coating onto said surface,
whereby the precursors comprise amine, glycol, fluorocarbon, siloxane, quaternary ammonium, sulphonate, ammonium, phosphonate, metal nanoparticles, enzyme, surfactant, peptide, lipopeptide, chitosan or any combination thereof.

The present method also concerns particular uses of the above method:
- use of the method for decreasing adhesion of proteins, bacteria, viruses and/or funghi to the surface, whereby the precursors comprise amine, glycol, fluorocarbon, siloxane, sulphonate, ammonium, phosphonate, quaternary ammonium or any combination thereof;
- use of the method for decreasing proliferation of microbial material adherent to the surface, whereby the precursors comprise amine, siloxane, sulphonate, ammonium, phosphonate, quaternary ammonium, metal nanoparticles, enzyme, surfactant, peptide, lipopeptide or any combination thereof;
- use of the method for destroying or deactivating viruses upon contact with the surface, whereby the precursors comprise amine, siloxane, sulphonate, ammonium, phosphonate, quaternary ammonium, metal nanoparticles, enzyme, surfactant, peptide, lipopeptide or any combination thereof, and
- use of the method for collecting microbial material on the surface, whereby the precursors comprise chitosan.

The present applicants have found that the abovementioned precursors significantly alter the surface properties with respect to biological organisms and compounds. Furthermore, the atmospheric low-temperature plasma coating technique, whereby the precursors are inserted into the plasma, and the surface is exposed to resulting plasma, can be applied at a high throughput rate, while still allowing for a very smooth, thin coating. The plasma technique also allows treatment of surfaces having a large range of shapes and sizes.

The present invention also relates to a coated container having a surface with a bio-active layer and to a coated preform for a container, the preform having a surface with a bio-active layer. Preferably the bio-active layer is applied using the method of the present invention.

Plasma techniques to deposit a thin layer on a surface have been applied previously. The present applicant and inventors have previously filed patent applications on this subject.

Document WO2019243631A1 discloses a method for plasma coating an object comprising an object profile, comprising the steps of: a) manufacturing a replaceable shield comprising a jet inlet, a nozzle outlet and a sidewall extending from the jet inlet to the nozzle outlet, wherein the nozzle outlet comprises an edge essentially congruent to at least part of the object profile; b) detachably attaching the replaceable shield to a jet outlet of a plasma jet generator; c) placing the object at the nozzle outlet such that the object profile fits closely to the nozzle outlet edge, thereby minimizing a gap between the nozzle outlet and the object; d) plasma coating the object with a low-temperature, oxygen-free plasma at an operating pressure which is higher than the atmospheric pressure, preferably by at most 10%, by providing a plasma jet in the shield via the plasma jet generator and injecting coating precursors in the plasma jet in the shield, thereby creating said operating pressure, thereby plasma coating the object in an oxygen-depleted plasma zone.

Document WO2019038378A1 discloses a method for depositing a coating on a substrate. A first precursor comprising fluoro-acrylate monomers, fluoro-alkyl acrylate monomers, fluoro-methacrylate monomers, fluoro-alkyl methacrylate monomers, fluoro-silane monomers, or a combination or derivates thereof is provided. A second precursor comprising linear siloxanes, silane monomers, cyclosiloxanes, cyclosilane monomers, or a combination or derivates thereof is provided. The first and second precursors are co-injected in a treatment region. An atmospheric or reduced pressure plasma discharge is created in said treatment region. The substrate coating comprises alternated multi-stacked nanostructures and is formed by copolymerization of the first and second precursors.

These documents describe a number of plasma techniques for depositing a layer onto a surface by producing a, preferably oxygen-poor or oxygen-free, plasma stream and by introducing a monomer precursor in the plasma stream. The plasma stream is then directed onto the surface to be treated. Hereby a polymerisation of the monomer directly onto the surface takes place. The technique makes use of low-temperature plasma, typically between 0 °C and 100°C, and preferably at room temperature. The plasma is also applied at or around atmospheric pressure, which is drastically faster than vacuum pressure plasma techniques. The plasma pressure is slightly higher than ambient pressure in order to ensure a directed plasma stream and to ensure that oxygen present in the surrounding air is evacuated from the surface at the time of treatment.

### Brief discussion of the figures

Figure 1: at t=t0 the plasma is on. A precursor R-X is added to the plasma gas and the plasma is contacted with the substrate. Hereby the precursor R-X is radicalized, and the substrate is activated.
Figure 2: at t=t1 the plasma is on. Radical recombination reactions are taking place on the surface, resulting in a covalent bond between substrate and precursor.
Figure 3: at t=t2, the plasma is on. Film growth and thickness depend on treatment time. Also cross-linking is taking place.
Figure 4: at t=t3 the plasma is off. After the plasma treatment, a functional plasma deposited film remains which is grafted onto the substrate.

### Detailed description of the invention

As indicated above, the present invention relates to a method for providing a bio-active layer on a surface, comprising the steps of:
a) ionizing a plasma gas at low temperature and at about atmospheric pressure, thereby creating a plasma;
b) introducing a precursor into said plasma;
c) exposing the surface to said plasma comprising said precursor, thereby forming a coating onto said surface,
whereby the precursors comprise amine, glycol, fluorocarbon, siloxane, sulphonate, ammonium, phosphonate, quaternary ammonium, metal nanoparticles, enzyme, surfactant, peptide, lipopeptide, chitosan or any combination thereof. Note that the resulting bio-active layer is non-specific.

Preferably, the bio-active layer may be an antibiofouling layer, an antibacterial layer, an antiviral layer and/or an microbial collecting layer.

In a preferred embodiment, the precursors comprise any of the following:
- an organo-siloxane with a functional group;
- a polymerizable compound with a functional group, whereby preferably said polymerizable compound is an acrylate, a methacrylate or a vinyl , and/or
- a saturated compound with a functional group,
wherein the functional group may be a fluorinated functional group, a glycol-based functional group, and amine group, a sulphonate-based functional group, an ammonium-based functional group or a phosphonate-based functional group. Preferably hereby, the amine group may be a primary amine group, a secondary amine group or a tertiary amine group. In a preferred embodiment, the precursors comprise PFDA and/or BUTAMA.

The present method also concerns particular uses of the above method:
- use of the method for decreasing adhesion of proteins, bacteria, viruses and/or funghi to the surface, whereby the precursors comprise amine, glycol, fluorocarbon, siloxane, sulphonate, ammonium, phosphonate, quaternary ammonium or any combination thereof, preferably whereby the precursors comprise any of the following:
   - an organo-siloxane with a functional group;
   - a polymerizable compound with a functional group, whereby preferably said polymerizable compound is an acrylate, a methacrylate or a vinyl, and/or
   - a saturated compound with a functional group,
      wherein the functional group may be a fluorinated functional group, a glycol-based functional group, and amine group, a sulphonate-based functional group, an ammonium-based functional group or a phosphonate-based functional group. Preferably hereby, the amine group may be a primary amine group, a secondary amine group or a tertiary amine group. In a preferred embodiment, the precursors comprise PFDA and/or BUTAMA;
- use of the method for decreasing proliferation of microbial material adherent to the surface, whereby the precursors comprise amine, siloxane, sulphonate, ammonium, phosphonate, quaternary ammonium, metal nanoparticles, enzyme, surfactant, peptide, lipopeptide or any combination thereof, and
- use of the method for collecting microbial material on the surface, whereby the precursors comprise chitosan.

These specific effects for the different precursors are summarized the table below:

| **Function** | **Precursor type** | **Tested precursors** |
|---|---|---|
| Antibiofouling - limiting adhesion of proteins, bacteria, viruses, funghi etc and thus biofouling of the container (nonspecific binding of biological material). | Amines, glycols, fluorocarbons, siloxanes, sulphonate, ammonium, phosphonate, quarternary ammonium, and organo-siloxanes, (meth)acrylates, saturated compounds with a functional group as specified in the text | PFDA, PFDTES, PEGMEA, DEGGEA, BUTAMA, DIMAEMA |
| Antibacterial - inhibiting proliferation of microbial material that adheres to the surface | Amines, siloxanes, sulphonate, ammonium, phosphonate, metal nanoparticles (e.g. Au, Ag, Cu), enzymes, surfactants, peptides, lipopeptides, quarternary ammonium | BUTAMA, DIMAEMA |
| Antiviral - having the capacity to destroy or inactivate viruses upon contact with the surface | Amines, siloxanes, sulphonate, ammonium, phosphonate, metal nanoparticles (e.g. Au, Ag, Cu), enzymes, surfactants, peptides, lipopeptides, quaternary ammonium | |
| Microbe collecting | Chitosan, | Chitosan solution |

In the table above, abbreviations have been used for at least the following chemical compounds: 1H,1H,2H,2H-Perfluorodecyl acrylate (PFDA), 1H,1H,2H,2H-Perfluorodecyltriethoxysilane (PFDTES), poly(ethylene glycol) methyl ether acrylate (PEGMEA), di(ethylene glycol) ethyl ether acrylate (DEGGEA), 2-(tert-butylamino)ethyl methacrylate (BUTAMA), 2-(Dimethylamino)ethyl methacrylate (DIMAEMA).

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1 % or less, and still more preferably +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.
Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.
The recitation of numerical ranges by endpoints includes all numbers and fractions subsumed within that range, as well as the recited endpoints.
The expression "% by weight", "weight percent", "%wt" or "wt%", here and throughout the description unless otherwise defined, refers to the relative weight of the respective component based on the overall weight of the formulation. The expression "% by volume", "volume percent", "%vol" or "vol%", here and throughout the description unless otherwise defined, refers to the relative volume of the respective component based on the overall volume of the formulation.
Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, 25 ≥6 or ≥7 etc. of said members, and up to all said members.
"A preform" as used herein refers an object that requires an at least one additional reshaping, whereby the object may or may not have undergone a preliminary reshaping.
"A thermoplastic preform" as used herein refers an object, partially or fully made from a thermoplastic material, that requires an at least one additional reshaping, whereby the thermoplastic object may or may not have undergone a preliminary reshaping.
As used herein, the term biofouling refers to the adhesion or accumulation of microbes (such as bacteria, fungi, viruses) and/or other biologic material, (such as proteins) on a surface. Analogously, the term antibiofouling refers to preventing or decreasing adhesion or accumulation of microbes and/or other biologic material to a surface.
As used herein, the term antimicrobial refers to decreasing proliferation of microbial material, in particular bacterial material, that may be present on a surface.
As used herein, the term antiviral refers to the capacity to destroy or inactivate viruses upon contact.
Using the method as described herein, an antibiofouling, antimicrobial and/or antiviral coating layer can be obtained that is non-specific, meaning that the coating layer is effective against many different kinds of biofouling, microbial and/or viral contamination.
As used herein, the term aerosol refers to a suspension of fine solid particles or liquid droplets, in air or in another gas.
"Stretch blow moulding", "blow-stretch moulding" or "blow moulding" as used herein refers to any process wherein a preform undergoes a shape transformation into a container, which may or may not comprise a thermoplastic material, under the influence of a pressurized fluid.
"A thermoplastic container" as used herein refers to any container partially or fully made from a thermoplastic material, e.g. a bottle or a box.

The present invention is particularly aimed at limiting bio-contamination of surfaces. In this respect, the precursors which lead to microbe collecting properties, can be used to treat surfaces of material used to clean e.g. containers for biological samples.

The present invention is preferably applied to surfaces of containers, more preferably containers for biological liquids. Biological liquids may include food and beverages with a biological ingredient or coming from a biological source. Examples are wine, beer, milk, fruit juices, etc. Biological liquids may also include biological samples taken for analysis purposes, such as blood, saliva, naturally occurring water (from rivers, seas, natural sources, etc.), etc. The treated surfaces may be an inner surface of the container and/or an outer surface of the container. Preferably at least the inner surface of the container is treated.

Liquid containers are commonly made from a plastic, and preferably a thermoplastic material, such as polyethylene terephthalate (PET), polylactic acid (PLA), polyethylene 2,5-furandicarboxylate furanoate (PEF), polypropylene (PP) and polyethylene (PE). One typical way of producing such bottles is to first manufacture a preform, e.g. by injection moulding, and subsequently increase the preform to its full bottle size by a stretch blow process.

In a further aspect, the present invention relates to a coated preform, whereby the coating is obtainable using a method in accordance with the present invention. A plasma coated preform, preferably formed from a thermoplastic material, has several advantages. The coating is deposited with high precision both in terms of thickness and in the location of the deposition. Hereby the precursor resources are handled as efficiently as possible, increasing the efficiency of the production process. Furthermore, the ability to control the thickness allows for the deposition of a functional coating which does not appear ostensibly visible, avoiding the possibility of giving an impression of a faulty or contaminated preform.

The method of the present invention is especially advantageous for a more reliable production of containers, in particular thermoplastic containers. Preforms whereby the deposited coating is ostensibly visible could be accidentally thrown away before they undergo the stretch blow moulding process, as they give the impression of being faulty or contaminated. The method of the present invention allows to provide a functional coating which is of very high quality and smoothness, and is not ostensibly visible as a coating. In fact, the coating layer can be intact over the outer surface, the inner surface or both outer and inner surface of the preform and of the container. Further, the preforms are suitable to be stretch blown into containers. The preforms are especially more suitable to be used in a stretch blow moulding process if the whole inner and/or outer surface of the preform is coated.

The present invention thus also concerns a method for manufacturing a coated container, comprising the steps of:
- providing a preform, preferably of a thermoplastic material;
- coating a surface of said preform by providing a coating layer on said preform in accordance with the method of the present invention;
- optionally storing and/or transporting said coated preform, and
- increasing the coated preform in size, preferably by stretch blow moulding,
thereby obtaining said coated container.

In preferred embodiments, the coating layer is applied on the entire inner surface, on the entire outer surface or on the entire inner and outer surface of the preform or the container. In that way, the bio-active properties of the inner and/or outer surfaces of the preform or container onto which the coating layer is applied are determined mainly by the properties of the coating layer.

Preferably the coating layer is intact. An intact coating layer is defined as a coating layer which covers the entire surface onto which it was applied, without regions where the material of the surface onto which the coating layer was applied is exposed. In that way the bio-active properties of the preform or container onto which the coating layer is applied are determined by the properties of the coating layer. In order to confirm the presence of the intact coating layer with a thickness according to the invention, surface techniques, such as time of flight secondary ion mass spectrometry (TOF-SIMS), may be applied.

Preferably the coating layer is a conformal coating layer. Such a conformal layer follows closely the surface, even in case the surface comprises large curvatures, e.g. near the opening, near a neck or near the bottom of the preform or container.

The above functionalities may be desired for the complete preform or container, but may also be desired or needed only on a portion of the preform or container. Moreover, different portions of the container may be desired to have different functionalities, or a different combination of functionalities. Hence, in embodiments of the present invention, different coatings may be applied on different portions of the preform and/or container. In embodiments, the plasma coating can be deposited on at least one section or over the whole surface of the preform or the container.

In an embodiment of the invention, a container is manufactured by increasing the preform in size, preferably by stretch blow moulding, with a stretch ratio of between 5 and 20.

If the preform is being increased in size, the stretching ratio with respect to volume preferably is between 2 and 20, more preferably between 10 and 15, still more preferably between 12 and 15, such as 12, 13, 14, 15 or any value there between, most preferably about 13.5. Preferably, said preform increases in length with a stretching ratio of 2 to 20, preferably 3 to 15, more preferably 4 to 12, even more preferably 5 to 10, and/or said preform increases in diameter with a stretching ratio of 2 to 20, preferably 3 to 15, more preferably 4 to 12, even more preferably 5 to 10. During the step of increasing the size of the preform, the length, diameter and/or volume are increased in accordance with the above-mentioned ranges. The thickness of the coating layer decreases with the increase of the stretch ratio. It is believed that the thickness of the coating on the preform decreases inversely proportional to the increase in surface. As the shape of the preform may change during the increase in size, the theoretical inverse proportionality of the thickness reduction to the volume stretching ratio to the power 2/3 does not necessarily hold. In an embodiment, the thickness of the coating on the container is 30nm or less, more preferably 25 nm or less, still more preferably 20 nm or less, yet more preferably 15 nm or less, even more preferably 10 nm or less, such as 10 nm, 9 nm, 8 nm, 7 nm, 6 nm, 5 nm, 4 nm, 3 nm, 2 nm, 1nm or any value there between, most preferably about 6 nm. Preferably the coating on the container is at least 2 nm thick.

In order to stretch blow mould the preforms into containers, the thermoplastic preforms preferably possess a stretching ratio in the length as well as in diameter.

In a preferred embodiment the preform or container comprises at least one polymer chosen from the list of polyethylene terephthalate (PET), polyethylene (PE), polypropylene (PP), polyethylene 2,5-furandicarboxylate (PEF) and polyethylene naphthalate (PEN) and polylactic acid (PLA).

In a preferred embodiment, the surface is a food product contact surface, preferably a beverage contact surface, more preferably the internal surface of a container and/or part of a beverage dispensing assembly, such as a bottle, bottle cap, can, keg, valve, dispensing line, and/or dispensing tap.

The method of the present invention is preferably applied to a surface of any of the following:
- a membrane and/or a filtration system, more preferably a submersed membrane and/or a submersed filtration system, which may be used in desalination plants or water recycling plant. Hereby, an antibiofouling layer may prevent or limit clogging and efficiency loss as a result of biofouling;
- a filtration membrane, whereby an antibiofouling, antibacterial and/or antiviral layer helps to avoid fouling of the membrane and/or bacterial contamination of the membrane;
- a water cooling line, which can be used in industrial production systems, in household equipment, in radiators, in computer cooling systems, preferably high-end computer water cooling systems. Hereby, an antibiofouling layer may prevent or limit efficiency loss and subsequent damage of inaccurately cooled parts;
- a drain pipe and/or a sewage system, whereby an antibiofouling layer helps to reduce clogging, reducing maintenance frequency and cost, and an antibacterial and/or antiviral layer helps in reducing contamination;
- a dispenser pipe and/or a dispenser tap, e.g. for liquids, whereby an antibiofouling, antibacterial and/or antiviral layer helps to avoid cross contamination of nutrients in the liquids;
- a conveying system such as a belt, a grip, an arm;
- food packaging, whereby the shelf life of the products in the packaging can be drastically increased by the antibiofouling, antibacterial and/or antiviral layer. The packaged products hereby are preferably any of the following: beer, ketchup, mayonnaise, milk and dairy products, soft drinks;
- a food handling device, whereby the antibiofouling, antibacterial and/or antiviral layer helps in avoiding cross contamination of the food;
- a liquid transportation system and/or a liquid storage tank, whereby the antibiofouling, antibacterial and/or antiviral layer helps in avoiding cross contamination of the liquid;
- a tactile human user interface, such as a keyboard, a computer mouse, a touchscreen, a phone, a tablet. Hereby, the tactile component of such interface is preferably provided with an antibacterial and/or antiviral layer to avoid contamination
- technical textile and/or surgical textile used in hospitals or in similar working environments whereby an antibacterial and/or antiviral layer helps in reducing contamination.

It should be clear in the above list, that when an antibiofouling layer and an antibacterial layer are both preferred, preferably an antibiofouling and antibacterial layer, i.e. a layer which comprises both antibiofouling and antibacterial properties, is provided in accordance with the method of the present invention. Likewise, when an antibiofouling layer and an antiviral layer are both preferred, preferably an antibiofouling and antiviral layer, i.e. a layer which comprises both antibiofouling and antiviral properties, is provided in accordance with the method of the present invention. Further, when an antibacterial layer and an antiviral layer are both preferred, preferably an antibacterial and antiviral layer, i.e. a layer which comprises both antibacterial and antiviral properties, is provided in accordance with the method of the present invention.

The method of the present invention can also preferably be applied to a surface of any of the following:
- a marine vessel or an underwater construction, whereby the whereby an antibiofouling layer may decrease the accumulation of biofilms or bigger organisms on the surface. Accumulation of biofilms and bigger organisms on marine vessels increases drag and thus fuel consumption of said vessels. It can also lead to decreased mechanical strength and/or functionality of underwater construction elements (eg. Ropes, chains);
- a microfluidics circuits, such as a microfluidics chip, whereby an antibiofouling layer on an inner surface of the circuit prevents nonspecific binding of processed materials on inner surfaces of the microfluidics circuit. In applications where small volumes of analytes are transported along relatively long channels it is important to prevent the nonspecific binding of processed materials onto chip walls. This can cause a loss of analysed material (poor detection) before readout or increase cross-contamination between different measurement runs, resulting in a loss of specificity;
- an in-vitro diagnostic (IVD) assay, whereby an antibiofouling layer prevents or decreases nonspecific binding and loss of analyte, allowing for more precise diagnostic tests, limiting false positive or false negative readouts, and preventing loss of sampled material before it has reached the readout point (e.g. sticking of proteins of interest to transport channels). Improving efficiency of such a process allows for faster and more reliable processing as well as allows to limit the amount of sampled material necessary;
- a drug solution packaging container, preferably a vaccine packaging container, whereby it is essential that all the vaccination material can be evacuated from the container and no material loss is observed due to nonspecific binding to the container walls. An antibiofouling layer may ensure this;
- a fluidized bed reactor, whereby antibiofouling surfaces are key in keeping the reactor efficiency and prevent the loss of specificity in a reactor where the interface between a catalyst surface and a liquid medium is key;
- a medical device, preferably a reusable medical device, whereby an antibiofouling, antibacterial and/or antiviral layer decreases fouling and facilitates sterilization. Accumulation of material on medical devices can facilitate the spread of disease, and be a source of infection. This is also particularly preferred for an implantable medical device, whereby an antibiofouling, antibacterial and/or antiviral layer decreases risks of infection. Examples of such implantable medical devices are implants, catheters, needles, pacemakers, implantable sensors, etc.;
- a surgical stitch, fiber or needle, whereby an antibiofouling, antibacterial and antiviral layer prevents or decreases the risk of infection, thereby promoting and accelerating wound healing and limiting the spread of infection in wound areas;
- a wooden panel, which may be for indoor use or for outdoor use, and in particular a wooden panel with a surface having a high moisture exposure. An antibiofouling, antibacterial and/or antiviral layer on the wooden panel increases protection for instance if it is used for a floor, a balcony, a terrace, a sauna;
- a public space surface, whereby an antibacterial and/or antiviral layer helps reducing the risk of disease spread. Antimicrobial and antiviral surfaces can help to reduce the risk of disease spread in highly populated places and areas where a high number of people are in contact with certain surfaces like doorknobs, handrails, elevator buttons, bathroom spaces, kitchens, thereby also reducing maintenance and cleaning frequency;
- a hospital surface or a caring facility surface, whereby an antibacterial and/or antiviral layer prevents disease spread. Antimicrobial and/or antiviral surfaces in hospitals, operating theatres, doctor practices, etc. limits the spread of infections in key exposure points;
- a garment, whereby an antibacterial and/or antiviral layer prevents microorganism proliferation. By preventing microorganism proliferation, clothing can be used more times in between washes, and also reduces odour after use because odour may at least partially be due to microorganism-induced reactions;
- tissues for surface cleaning, whereby a microbial collecting layer results in an efficient cleaning of surfaces in public spaces (bathrooms, handrails, doorknobs), hospitals, gyms, aircrafts, trains, buses, etc. Cleaning cloths for households may also be provided with a microbial collecting layer. Applying a microbial collecting layer on a cleaning cloth or tissue may prevent the need of an additional surface spraying;
- biological material collection devices, for instance swabs, whereby a microbial layer allows easy recovery of microorganisms for biological analysis. A high-affinity surface can thus be formed to enable efficient material collection for biological analysis and/or assays, and more efficient swab tests.

In an embodiment of the above methods, at least one precursor is administered in the plasma as a gas, as a liquid or as a solid, preferably as a gas or as a liquid in the form of an aerosol, most preferably as a liquid in the form of an aerosol.

A low-energy plasma is defined herein as a plasma of which the power density is high enough to activate the precursors, the substrate, allowing a chemical reaction to take place, but low enough to prevent destruction of the precursors, the substrate. The power density is preferably in the range of 0.2 W/I to 8W/I, more preferably between 0.5 W/I and 7 W/I, still more preferably between 0.8 W/I and 6 W/I, yet more preferably between 1 W/I and 5 W/I, even more preferably between 1.5 W/I and 4 W/I, still even more preferably between 2 W/I and 3 W/I, such as 2 W/I, 2.1 W/I, 2.2 W/I, 2.3 W/I, 2.4 W/I, 2.5 W/I, 2.6 W/I, 2.7 W/I, 2.8 W/I, 2.9 W/I, 3 W/I or any value therebetween, most preferably in the range of 2.4W/I to 2.6 W/I.

A cold plasma is defined herein as a plasma of which the temperature is sufficiently low to not melt or otherwise damage the precursor and/or substrate that are exposed to said cold plasma. The temperature of the plasma may preferably be 150°C or lower, more preferably 130 °C or lower, still more preferably 100 °C or lower, yet more preferably 70°C or lower, even more preferably 60°C or lower, yet more preferably 55°C or lower, still even more preferably 50°C or lower, even yet more preferably 45°C or lower. The temperature of the plasma may preferably be as low as room temperature, i.e., the temperature surrounding the plasma. Depending on the location where the coating process is carried out, room temperature may be in the range of 10 to 40 °C, preferably 15-30 °C, such as 20-25 °C. The temperature of the plasma will generally not be lower than room temperature.

When depositing temperature sensitive coatings it is important to keep the temperature of the plasma steady at the optimal value. Depending on the type of precursor or precursor mixture and/or the pressure, the optimal temperature may be selected. Hence, in an embodiment the temperature of the plasma is selected taking into account the type of precursor, the precursor mixture and/or the plasma pressure.

The plasma of the present invention is preferably an atmospheric plasma which has a pressure around ambient pressure. Such plasma is created and discharged at a pressure of between 400 and 1600 hPa, preferably at a pressure between 450 and 1400, even more preferably at a pressure between 500 and 1300 hPa, yet more preferably between 600 and 1250 hPa, even more preferably between 700 hPa and 1200 hPa, still more preferably between 800 hPa and 1150 hPa, yet more preferably between 900 hPa and 1100 hPa, most preferably about ambient pressure, which can typically be about 1013 hPa. Pressure of the plasma can play an important role in the quality of the deposited layer. Some plasma precursors are sensitive to too low and/or too high plasma pressures compared to the atmospheric pressure, while other precursors provide a better coating at lower or higher plasma pressures. However, note that low-energy, cold plasma can typically be applied under reduced pressure of lower than 400 hPa down to vacuum, or increased pressure of more than 1600 hPa, both types requiring a pressure vessel to maintain such low or high pressures. The use of a plasma with pressures in the currently preferred ranges around the ambient pressure reduces any costs and difficulties relating to maintaining pressure differences and pressure gradients.

In a preferred embodiment, the plasma is a dielectric barrier discharge plasma under atmospheric pressure.

The functionality of the layer may depend on the plasma conditions, e.g. temperature and pressure, in which the layer is deposited. The temperature and/or atmospheric conditions may therefore be selected taking into account the desired functionality of the coating layer.

In a preferred embodiment, the plasma gas is ionized by means of electrodes, whereby more preferably said plasma gas is ionized by said electrodes with a power of at most 10 Watt per cm² of the electrode surface, more preferably at most 9 W/cm², still more preferably at most 8 W/cm², even more preferably at most 7.5 W/cm². In many embodiments of the present invention, the power applied by the electrodes is minimally 1 W/cm², preferably minimally 2 W/cm², still more preferably minimally 2.5 W/cm². The power is most preferably between 2.5 and 7.5 W/cm².

In a preferred embodiment, the plasma gas comprises inert gas for at least 99 % by volume. The use of an inert gas as plasma gas essentially ensures that no reactions take place with the plasma gas and the equipment, between molecules of the plasma gas themselves, even not if temperature is increased. In fact, the lack of reactions also seems to allow to keep the plasma temperature low, e.g. less than 50°C and preferably around room temperature. The low temperature of the plasma allows treatment of substrates made from a wide range of materials. Furthermore, this allows a better control over the formed coating and the adhesion properties thereof. Without wishing to be bound by theory, the inventors believe that the lack of reactive gas in the plasma gas ensures that none to very few chemical reactions with the plasma gas take place at the surface of the substrate, hence the better control over the adhesion properties. Also, if the plasma gas is nitrogen (N2) or is mainly comprised of N2, the low power applied to the plasma in embodiments of the present invention, are seen to result in very little to none nitrogen incorporated in the resulting coating. This is in stark contrast with the use of e.g. O2, NH3 or CH4 as a plasma gas, all of which are deemed reactive gasses, and all of which seem to leave more traces within the coating of the plasma gas, thereby leading to loss of control over the adhesion properties.

In a preferred embodiment, the precursor is added in a plasma gas afterglow. Hereby plasma gas flows over and between a plasma-inducing system, e.g. a set of electrodes. Downstream of the plasma-inducing system, a plasma gas afterglow is present, which comprises a large number of ionized plasma gas molecules which did not have the time to de-ionize. The precursor is preferably introduced in said plasma gas afterglow. As a result, the precursor does not need to be introduced in between e.g. electrodes which are used to ionize the plasma gas, and thus the electrodes may be kept clean for a long duration as the precursor cannot form a layer onto the electrodes.

In a preferred embodiment, said plasma gas comprises inert gas for at least 99 % by volume, i.e. 1 % by volume (vol.%) or less of the plasma gas is a reactive gas. More preferably at least 99.5 vol%, still more preferably at least 99.8 vol%, still more preferably at least 99.9 vol%, even more preferably at least 99.95 vol%, yet more preferably at least 99.99 vol% of the plasma gas is an inert gas. This means that the plasma gas preferably comprises 1 vol.% or less O2, more preferably at most 0.5 vol%, still more preferably at most 0.2 vol%, yet more preferably at most 0.1 vol%, still more preferably at most 0.05 vol%, even more preferably at most 0.01 vol% of O2. In the atmospheric plasma process of the present invention, this can for instance be achieved by using an overpressure with respect to ambient pressure, e.g. the plasma gas is delivered at a pressure of at least 1013mbar, preferably at least 1020mbar, more preferably at least 1030mbar, even more preferably at least 1040mbar, still more preferably at least 1050 mbar. Such slight overpressures allow to create an oxygen-poor and even oxygen-free zone in the plasma afterglow.

The atmospheric plasma coating process of the present invention allows both batch processes and inline processes. Hence, in an embodiment, the surface moves during step c and in another embodiment, the surface is static during step c. In yet another embodiment, the surface moves and remains static during step c according to a predetermined trajectory. This allows to provide e.g. a thicker coating on some portions of the surface and thinner coating on other portions of said surface.

In an embodiment of the invention, the plasma gas flow is between 1 and 1500 standard liter per minute ("slpm"), more preferably between 50 and 1500 slpm. 1 "slpm" is a liter of the gas at atmospheric pressure and at room temperature. More preferably the plasma gas flow is between 80 slpm and 1000 slpm. Preferably the plasma gas comprising the precursor is jettisoned from an outlet of a plasma jet nozzle. In a preferred embodiment, the plasma gas flow is determined taking into account a distance between the surface of the substrate and the outlet of a plasma jet nozzle. The larger such distance, the more plasma gas flow is required to ensure that the surface is subjected to a plasma without reactive gasses other than the used precursor. In particular, one can ensure that the plasma is essentially free of oxygen coming from e.g. the surrounding air.

In an embodiment of the present invention, the substrate undergoes a plasma pre-treatment step prior to being subjected to the plasma comprising the precursor. This is preferably performed in case of extremely inert surfaces, such as glass, silicon wafers, gold, high performance engineering thermoplastics or thermosets, etc. Hereby, the plasma pre-treatment preferably activates the surface of the substrate, i.e. it generates surface radicals, and may also preferably a least partially oxidize the surface, leading to an increased surface energy in most cases.

In preferred embodiments, the pre-treatment is performed:
- in an oxygen-rich plasma environment, more preferably using air or CO2 or other oxygen containing species,
- at higher power compared to the power used during the plasma gas ionization step a), and/or
- without the addition of chemical precursors.

In embodiments of the present invention, the coated substrate undergoes an atmospheric plasma post-treatment step. Preferably during this post-treatment step, the molecular weight of the plasma film is increased and/or the thermal stability of the plasma film is increased.

In preferred embodiments, the plasma post-treatment is preformed:
- in absence of oxygen, using inert plasma gases, such as N2, Ar, of He (or mixtures thereof);
- at smaller plasma power than the power used during the plasma gas ionization step a), and/or
- without the addition of chemical precursors.

The plasma chemically activates the precursors and/or the surface. This activation of the precursors and/or the surface may occur by double atomic bonds opening, radical removal and/or ion formation. This allows and/or improves the reactions required to form the coating layer. These reactions may involve:
- reactions between precursors, such as polymerization reactions and cross-linking reactions, and/or
- reactions between precursors and the surface, such as covalent bonding reactions. Preferably, the coating layer is covalently grafted to the surface.

In embodiments of the invention, the plasma coating has a thickness between 5 and 600 nm, preferably between 5 and 500 nm, more preferably between 10 and 500 nm, even more preferably between 10 and 300 nm, yet more preferably between 10 and 200 nm, still more preferably between 10 and 80 nm, such as 10 nm, 20 nm, 30 nm, 40 nm, 50 nm, 60 nm, 70 nm, 80 nm or any value therebetween, most preferably about 20 nm. The plasma coating thickness can be well-controlled by controlling the exposure time of the surface to the plasma and/or the precursors.

In a preferred embodiment, the plasma temperature is at most 50°C, more preferably at most 40°C, still more preferably at most 30°C and most preferably around room temperature.

In a preferred embodiment, the plasma temperature is controlled, more preferably by cooling electrodes used for ionizing the plasma gas. This can be e.g. water-cooled and/or air-cooled electrodes. Preferably the temperature of the electrodes is measured and/or the temperature of the substrate is measured in order to allow better control the temperature of the plasma gas. Typically this can be achieved by using a temperature control system, e.g. a PID controlling system, which allows to steer the cooling of the plasma, e.g. by cooling the electrodes, by checking how a predetermined desired plasma temperature relates to the measured temperature. Preferably the temperature of the electrodes and of the substrate is measured and the temperature control system ensures that the desired plasma temperature lies between the electrode temperature and the substrate temperature.

The surfaces which can be treated with the present invention may have any type of shape and size, and may be made from a large range of materials, for example:
- Polymers:
   - Commodities (e.g. PE, PP, PVC, PS, EPDM, polyolefins...)
   - Engineering thermoplastics (e.g. PET, PBT, PMMA, PC, PES, polyamides, aramides, Acrylonitrile styrene acrylate (ASA), acrylonitrile butadiene styrene (ABS),...)
   - Fluorinated polymers (e.g. PTFE, PVDF, Fluorinated ethylene propylene (FEP),...)
   - Biodegradable polymers (e.g. PLA, PCL,...)
   - Cross-linked polymers (e.g. epoxy-amines, polyurethanes, silicones,...)
   - Carbon fibres
   - Water soluble polymers (PEG, polyvinyl pyrrolidone (PVP), polyvinyl alcohol (PVA), polyacrylic acid (PAA), polyacrylamides, divinyl ether-maleic anhydride (DIVEMA), polyoxazoline, polyphosphates, polyphosphazenes,...)
- Natural materials: rayon or viscose, polysaccharides, chitosan, collagen, proteins, xanthan gum, pectins, dextran, carrageenan, guar gum, hyaluronic acid (HA), leather...
- Metals: Gold, silver, iron, brass, lead, iron, copper, tin, stainless steel, aluminium, zinc,... (including all possible alloys)
- Ceramics: Glass, silicon wafers, metal oxides (e.g. Al2O3, ZnO,...), carbides (e.g. SiC, titanium carbide,...), nitrides (e.g. Si3N4,...)

In an embodiment of the present invention, the method is applied to a surface of an expendable and/or stretchable material, preferably the layer being deposited prior to expansion and/or stretching of the material. Hereby, the inventors have found that the functionality of the layer can be sustained even if the material is expanded and/or stretched with a large expansion and/or stretching ratio. Preferably the material is used in a bottle, a tube a film or preforms thereof. Preferably the material is a polymer, such as can be used for polymeric bottles, tubes or films. The method of the present invention is preferably applied to a preform for a container, preferably for containing biological liquids, whereby the antibiofouling, antibacterial and/or antiviral layer is provided on a surface of the preform prior to expansion and/or stretching of the preform into the container.

The plasma deposition process of the present invention is based on the simultaneous generation of surface radicals (i.e. activation of the difficult-to-treat substrate) and radicalized species in the plasma gas phase, leading to radical recombination reactions of the species to the substrate (i.e. grafting based on covalent bonding). The chemical nature of the precursor can range from classic monomers to saturated molecules, from organic to inorganic molecules, from low molecular weight (e.g. monomers, oligomers) to high molecular weight (e.g. polymers being dissolved or emulsified).

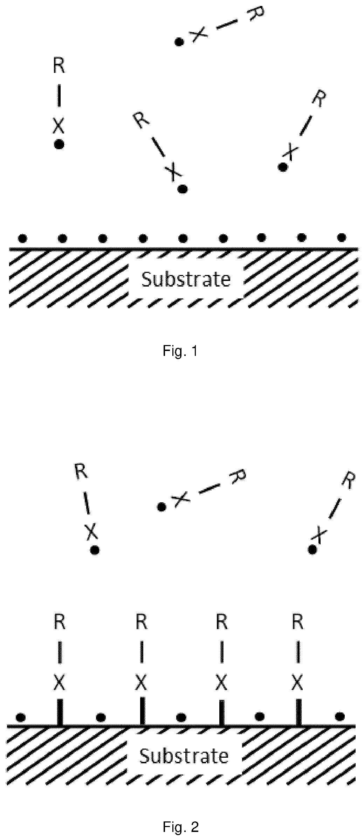

The scheme outlined in figures 1 to 4 indicate the different phases during the atmospheric plasma deposition process:
**Figure 1****:** at t=t0 the plasma is on. A precursor R-X is added to the plasma gas and the plasma is contacted with the surface of the substrate. Hereby the precursor R-X is radicalized, and the surface is activated.
**Figure 2****:** at t=t1 the plasma is on. Radical recombination reactions are taking place on the surface, resulting in a covalent bond between surface of the substrate and precursor.

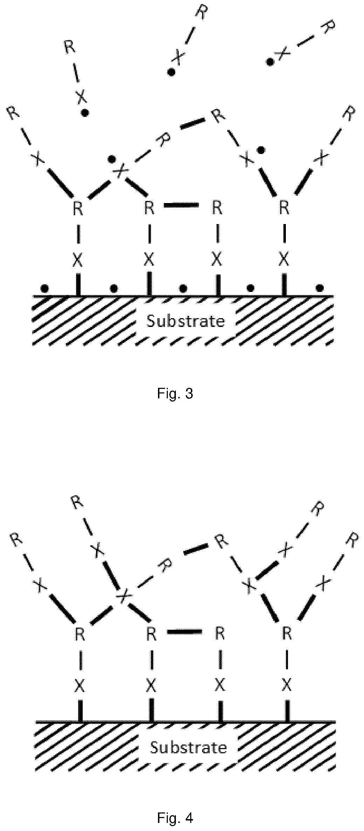

**Figure 3****:** at t=t2, the plasma is on. Film growth and thickness depend on treatment time. Also cross-linking is taking place.
**Figure 4****:** at t=t3 the plasma is off. After the plasma treatment, a functional plasma deposited film remains which is grafted onto the surface of the substrate.

In Step 1, the plasma is generated (can be based on direct or indirect plasma configurations, using an inert plasma gas such as N2, Argon, Helium, or any mixtures thereof), instantaneously generating radicalized species in the plasma gas phase. These species can be added to the plasma as a gas (or gas mixture), or a liquid (e.g. an aerosol, a spray, a liquid mixture, an emulsion, a dispersion, or polymer solution), preferably as a gas or as an aerosol. In the scheme outlined in figs. 1-4, we used the connotation "R-X" to denote the initial precursor, and "R-X•" the radicalized form of the precursor. "R" being the targeted functionality, and "X" being a part of the molecule being able to be radicalized. For example, "X" can be reactive (such as C=C double bonds, C=O, epoxy, isocyanate,...), but can also be unreactive (i.e. saturated), in this specific case, the radical will be formed based on hydrogen abstraction.

In addition to the radicalized species in the gas phase, also surface radicals are formed on the surface of the substrate which is also in contact with the plasma. The generation of these surface radicals can be mainly based on hydrogen abstraction or breaking of covalent bonds located at the surface of the substrate.

In Step 2, radical recombination reactions are taking place between the radicalized species and surface radicals. This radical recombination reaction results in a permanent grafting of the precursor to the surface by the formation of a covalent bond. It must be remarked that presence of reactive gasses such as O2, needs to be avoided during this phase.

In Step 3, film growth is taking place by the continuous incorporation of species by radical recombination. It must be remarked that the plasma process is 'non-specific', meaning that a specific precursor can be built in on the surface on any location, leading to a heterogeneous conformation of the plasma deposited film on a molecular level. Furthermore, the film growth can take place in a 'continuous' plasma or in a 'pulsed' plasma process. This pulsed plasma has a specific plasma off time, where recombination reactions are favoured, similar to propagation in conventional polymer synthesis.

In the final phase of the plasma deposition process (Step 4), the plasma is switched off, or similarly the substrate has left the plasma afterglow zone, leading to a fully functional coating layer which is covalently linked to the surface of the substrate.

The resulting plasma deposited film has the following unique features:
- *Covalently bonded* to the surface of the substrate;
- *Bio-active, for instance*:
   (i) adhesion of proteins, bacteria, viruses and/or funghi to the surface is decreased;
   (ii) proliferation of microbial material adherent to the surface is decreased
   (iii) having the capacity to destroy or inactivate viruses upon contact with the surface, and
   (iv) microbial material can be collected on the surface.
- *Heterogeneous*:
   Compared to polymeric analogues having a distinct repeat unit, the plasma deposited film is heterogeneous in nature. This means that besides a main carbon chain in the polymeric backbone, also other elements can be incorporated (originating from the introduced precursor).
- *Cross-linked*:
   During the film growth phase of the plasma deposited film, also radical sites are generated on the surface of the growing film itself. These radical sites are created randomly, leading to the creation of cross-links.
- *High molecular weight*:
   The molecular weight of the fully functional plasma deposited film is high (comparable to conventional thermosets), due to the cross-linked nature of the film. It must be remarked that the presence of O₂ needs to be avoided in the treatment area of the plasma process. When there is a significant amount of O₂ present (> 100 ppm), radical recombination reactions will be quenched, leading to low molecular weight fragments residing in the plasma deposited film, having a plasticizing effect. Hence, in most preferred embodiments, the plasma gas comprises at most 0.01 vol% O2.
- *Durable*:
   Due to the cross-linked nature and high molecular weight of the plasma deposited film, the durability of the film is greatly enhanced compared to conventional primers. Overall, it was tested that the time between the plasma deposition process and the application of an adhesive or topcoat can be extended to a period of minimum 6 months.
- *Dry*:
   After the plasma deposition process, the resulting film does not require any subsequent drying step. A subsequent curing step may also not be necessary, but may lead to improvement of the molecular weight of the film.

An apparatus for providing a coating layer onto a surface, in accordance with the present invention, can be found in European patent application no. EP18179354.8 filed on 22 June 2018 and in International patent application no. PCT/EP2019/066647 filed on 24 June 2019, both of which are incorporated. Such apparatus and the methods described in these documents can be used to provide the coating layer discussed in the present document.

The coating layer can be provided using an apparatus for depositing a coating via an atmospheric pressure plasma jet, the apparatus comprising:
- a plasma jet generator comprising a jet outlet; and
- a nozzle comprising an adaptor and a shield, preferably a replaceable shield, the shield comprising a jet inlet, a nozzle outlet and a sidewall extending from the jet inlet to the nozzle outlet, wherein the adaptor is preferably configured for detachably attaching the shield onto the plasma jet generator and thereby communicatively coupling the jet outlet and the jet inlet.

Preferably, the shield comprises at the jet inlet a flange attached to the sidewall, and wherein the adaptor comprises a retaining wall comprising an opening with size and shape adapted for retaining the flange.

Preferably, the shield is monolithic.

Preferably, the shield comprises an insulating material. More preferably, the shield comprises, and preferably is made of, a polymer material.

Preferably, the nozzle outlet of the shield comprises a non-planar edge.

Preferably, the jet outlet comprises an opening, and the jet inlet comprises an opening larger than the opening of the jet outlet.

Preferably, the sidewall comprises a tapering portion.

Preferably, the sidewall of the shield comprises at least one precursor inlet.

Preferably, the nozzle comprises a homogenization means, preferably the shield comprising flow disturbance elements.

Preferably, the nozzle is adapted for cooling, preferably the sidewall of the shield comprising a channel for passage of a cooling fluid.

Preferably, the nozzle outlet of the shield comprises an edge, and the apparatus is configured for maintaining said edge at a distance of at least 0.1 mm and at most 5 mm, preferably at least 0.2 mm and at most 2 mm, more preferably at least 0.5 mm and at most 1 mm, of said surface of said substrate.

## Claims

1. Method for providing a bio-active layer on a surface, comprising the steps of:
a) ionizing a plasma gas at low temperature and at about atmospheric pressure, thereby creating a plasma;
b) introducing a precursor into said plasma;
c) exposing the surface to said plasma comprising said precursor, thereby forming a coating onto said surface,
whereby the precursors comprise amine, glycol, fluorocarbon, siloxane, quaternary ammonium, sulphonate, ammonium, phosphonate, metal nanoparticles, enzyme, surfactant, peptide, lipopeptide, chitosan or any combination thereof.

2. A method according to any of the preceding claims, whereby said plasma gas comprises inert gas for at least 99 % by volume.

3. A method according to any of the preceding claims, whereby said plasma gas comprises O2 for at most 1% by volume.

4. A method according to any of the preceding claims, whereby said inert gas is a noble gas, preferably Ar or He or whereby said inert gas is a non-noble gas, preferably N2.

5. Method according to any of the preceding claims, wherein said plasma is created and discharged at a temperature between 10 and 130°C, preferably around room temperature, and wherein said plasma is created and discharged at a pressure between 500 and 1300 hPa.

6. A method according to any of the preceding claims, whereby said plasma gas is ionized by means of electrodes, preferably whereby said plasma gas is ionized by said electrodes with a power of at most 10 Watt per cm² of the electrode surface.

7. A method according to any of the preceding claims, whereby said surface undergoes a plasma pre-treatment step prior to being subjected to the plasma comprising the precursor.

8. Method according to any of the preceding claims, wherein the precursor is administered in the plasma as a gas, as a liquid or as a solid, preferably as a gas or as a liquid in the form of an aerosol, most preferably as a liquid in the form of an aerosol.

9. Method according to any of the preceding claims, wherein the coating layer has a thickness between 5 and 600nm, preferably between 10 and 300 nm.

10. Method according to any of the preceding claims, wherein the precursors comprise any of the following:
- an organo-siloxane with a functional group;
- a polymerizable compound with a functional group, whereby preferably said polymerizable compound is an acrylate, a methacrylate or a vinyl, and/or
- a saturated compound with a functional group, wherein the functional group may be a fluorinated functional group, a glycol-based functional group, an amine group, a sulphonate-based functional group, an ammonium-based functional group or a phosphonate-based functional group.

11. Use of a method according to any of the preceding claims for decreasing adhesion of proteins, bacteria, viruses and/or funghi to the surface, whereby the precursors comprise amine, glycol, fluorocarbon, siloxane, quaternary ammonium, sulphonate, ammonium, phosphonate, or any combination thereof, preferably whereby the precursors comprise any of the following:
- an organo-siloxane with a functional group;
- a polymerizable compound with a functional group, whereby preferably said polymerizable compound is an acrylate, a methacrylate or a vinyl, and/or
- a saturated compound with a functional group, wherein the functional group may be a fluorinated functional group, a glycol-based functional group, and amine group, a sulphonate-based functional group, an ammonium-based functional group or a phosphonate-based functional group.

12. Use of a method according to any of the claims 1 to 10 for decreasing proliferation of microbial material adherent to the surface and/or for destroying or deactivating viruses upon contact with the surface, whereby the precursors comprise amine, siloxane, sulphonate, ammonium, phosphonate, quaternary ammonium, metal nanoparticles, enzyme, surfactant, peptide, lipopeptide or any combination thereof.

13. Use of a method according to any of the claims 1 to 10 for collecting microbial material on the surface, whereby the precursors comprise chitosan.

14. A container having a surface with a bio-active layer which is applied using the method according to any of the claims 1 to 10.

15. A preform for a container, the preform having a surface with a bio-active layer which is applied using the method according to any of the claims 1 to 10.
